# EUROPÄISCHE PATENTANMELDUNG

(11) **EP 4 297 050 A1**
(43) Veröffentlichungstag der Anmeldung: **27.12.2023**
(21) Anmeldenummer: 23174936.7
(22) Anmeldetag: 23.05.2023
(51) Int. Cl.: H01B 13/012, B65B 13/30, B65B 13/32, H02G 3/04

(54) **UMREIFEN UND BÜNDELN VON LEITUNGSSÄTZEN**

(30) Priorität: 20.06.2022 DE 102022115224
(71) Anmelder: Lisa Dräxlmaier GmbH, 84137 Vilsbiburg (DE)
(72) Erfinder: Jakob, Günther, 94439 Roßbach (DE); Egenhofer, Ulrich, 84036 Landshut (DE); Rüter, Karsten, 84032 Landshut (DE)

(57) **Zusammenfassung**

Vorgeschlagen wird ein Verfahren zum Bilden eines Umreifungsabschnittes eines Leitungssatzes (110). Das Verfahren weist die Schritte des Bereitstellens eines Umreifungsmaterials (120) und des Herumführens eines Endes des Umreifungsmaterials (120) um zumindest einen Teil des Leitungssatzes (110) auf. Weiterhin weist das Verfahren den Schritt des Zusammenführens des um den Leitungssatz (110) herumgeführten Endes des Umreifungsmaterials (120) mit einem nicht um den Leitungssatz (110) herumgeführten Anteil des Umreifungsmaterials (120) auf, wobei das Umreifungsmaterial (120) eine Schlaufe (130) bildet durch welche der Leitungssatz (110) verläuft, sowie die Schritte des Anpassens der Größe der Schlaufe (130) an den Leitungssatz (110) zum Bündeln des Leitungssatzes (110), und des Verschweißens des um den Leitungssatz (110) herumgeführten Endes des Umreifungsmaterials (120) mit dem nicht um den Leitungssatz (110) herumgeführten Anteil des Umreifungsmaterials (120).

## Beschreibung

### Technisches Gebiet

Die vorliegende Erfindung betrifft ein Verfahren zum Bilden eines Umreifungsabschnittes eines Leitungssatzes. Zudem betrifft die Erfindung eine Vorrichtung zum Bilden eines Umreifungsabschnittes eines Leitungssatzes.

### Stand der Technik

Das Bündeln und Umreifen eines Leitungssatzes erfolgt im Stand der Technik üblicherweise mit Wickelband. Die Rolle des Wickelbandes muss hierbei in einer Rotationsbewegung um den gesamten Leitungsstrang geführt werden, was viel Platz benötigt. Dabei muss mit der Rolle des Wickelbands bei jeder Umdrehung zweimal die Leitungssatzebene durchdrungen werden, wobei der Leitungssatz eine Störkontur darstellt. Das Bündeln und Umreifen eines Leitungssatzes kann im Stand der Technik daher nur schwer automatisiert werden. Ebenso ist die Montage von Halteteilen am Leitungssatz und die Montage des Leitungssatzes um Fahrzeug eine Herausforderung für die Automatisierungstechnik. Üblicherweise werden mit dem Wickelband auch Halteteile am Leitungssatz durch Umwickeln befestigt. Diese Halteteile werden bei der Montage des Leitungssatzes im Fahrzeug verwendet, um den Leitungssatz zu befestigen.

Es besteht daher der Bedarf nach einem verbesserten Verfahren zum Umreifen von Leitungssätzen und zum Anbringen von Halteteilen, welches eine automatisierte Fertigung ermöglicht.

### Beschreibung der Erfindung

Eine Aufgabe der Erfindung ist es daher, ein verbessertes Verfahren bereitzustellen, welches automatisiert und kostengünstig ausgeführt werden kann und das Umreifen von Leitungssätzen und das Anbringen von Halteteilen am Leitungssatz ermöglicht. Die Erfindung soll das bisher verwendete Winkelband auf Leitungssätzen durch eine günstigere und besser automatisierbare Alternative ersetzen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die beschriebenen Ausführungsformen gelten gleichermaßen für das Verfahren zum Bilden eines Umreifungsabschnittes eines Leitungssatzes sowie die Vorrichtung zum Bilden eines Umreifungsabschnittes eines Leitungssatzes. Synergetische Effekte können aus verschiedenen Kombinationen der Ausführungsformen entstehen, auch wenn sie nicht im Detail beschrieben sind.

Weiterhin soll darauf hingewiesen werden, dass alle ein Verfahren betreffende Ausführungsformen der vorliegenden Erfindung in der beschriebenen Reihenfolge der Schritte ausgeführt werden können. Trotzdem muss das nicht die einzigmögliche und erforderliche Reihenfolge der Schritte des Verfahrens sein. Die hierin beschriebenen Verfahren können in einer anderen Reihenfolge der offenbarten Schritte ausgeführt werden, ohne von der entsprechenden Ausführungsform des Verfahrens abzuweichen, sofern nicht nachfolgend ausdrücklich das Gegenteil erwähnt wird.

Gemäß einem Aspekt der Erfindung wird ein Verfahren zum Bilden eines Umreifungsabschnittes eines Leitungssatzes vorgeschlagen. Das Verfahren weist die Schritte des Bereitstellens eines Umreifungsmaterials sowie des Herumführens eines Endes des Umreifungsmaterials um zumindest einen Teil eines Leitungssatzes auf. Weiterhin weist das Verfahren den Schritt des Zusammenführens des um den Leitungssatz herumgeführten Endes des Umreifungsmaterials mit einem nicht um den Leitungssatz herumgeführten Anteil des Umreifungsmaterials auf, wobei das Umreifungsmaterial eine Schlaufe bildet durch welche der Leitungssatz verläuft, sowie die Schritte des Anpassens der Größe der Schlaufe an den Leitungssatz zum Bündeln des Leitungssatzes, und des Verschweißens des um den Leitungssatz herumgeführten Endes des Umreifungsmaterials mit dem nicht um den Leitungssatz herumgeführten Anteil des Umreifungsmaterials.

Somit kann ein Leitungssatz vorzugsweise vollautomatisiert mit einer Umreifung versehen und gebündelt werden. Gemäß dem vorgeschlagenen Verfahren kann eine entsprechende Vorrichtung am Leitungssatz positioniert werden. Nach dem Auslösen der Vorrichtung, was automatisiert oder manuell geschehen kann, kann ein Umreifungsmaterial von einer Vorratsrolle abgerollt werden, und ein Ende des Umreifungsmaterials wird um einen Kabelstrang oder Leitungssatz herumgeführt. Das um den Leitungssatz herumgeführte Ende des Umreifungsmaterial wird mit einem nicht um den Leitungssatz herumgeführten Anteil oder Abschnitt des Umreifungsmaterials in Kontakt gebracht, so dass das Umreifungsmaterial den Leitungssatz umgibt, und der Leitungssatz durch eine Schlaufe aus Umreifungsmaterial verläuft. Vor oder nach dem Schritt des Zusammenführens kann das Umreifungsmaterial zusammengezogen und gespannt werden, so dass das Umreifungsmaterial eng an dem Leitungssatz anliegt, und diesen bündelt. Anschließend wird das um den Leitungssatz herumgeführte Ende des Umreifungsmaterial mit dem nicht um den Leitungssatz herumgeführten Anteil des Umreifungsmaterials durch Verschweißen verbunden. Zusätzlich oder alternativ kann auch eine Verklebung oder eine Verknotung des Umreifungsmaterials stattfinden. Die Verschweißung ermöglicht ein festes Verbinden des Umreifungsmaterials in einem einfach zu automatisierenden Prozess. Vorzugsweise wird nach dem Verschweißen das verschweißte und den Leitungssatz umgebende Umreifungsmaterial vom Vorrat, wie einer Rolle in der Vorrichtung, abgetrennt. Alternativ ist auch die Verwendung von vorkonfektionierten Abschnitten aus Umreifungsmaterial möglich, welche in der passenden Länge in der Vorrichtung bereitgestellt werden.

Durch den Verzicht auf Klebstoffe am Umreifungsmedium kann der Leitungssatz durch Zusammenziehen des Umreifungsmaterials automatisch gebündelt werden. Im Gegensatz zum Stand der Technik erfolgt die Verbindung und Befestigung des Umreifungsmediums in der automatisierten Vorrichtung durch Verschweißung. Der Platzbedarf in der Fertigung ist hierbei deutlich geringer als im Stand der Technik, da nur ein Teil des Umreifungsmaterials um das Leitungsbündel des Leitungssatzes geführt wird, und ein Herumführen der gesamten Vorratsrolle nicht notwendig ist. Das erfindungsgemäße Verfahren ist automatisierbar und platzsparend, so dass direkt an einem Baubrett zur Fertigung des Leitungssatzes damit gearbeitet werden kann.

Die Automatisierung wird durch die Verwendung von automatisierbaren Umreifungsmedien wie zum Beispiel thermoplastischer Textilien wie Faden, Umreifungsband, oder Schnur ermöglicht. Im Gegensatz zum Stand der Technik erfolgt die Befestigung des Umreifungsmediums durch Verschweißung, beispielsweise durch Ultraschallverschweißung.

Der Automatisierungsgrad in der Fertigung kann durch das erfindungsgemäße Verfahren wesentlich erhöht werden, da Umwickeln bzw. Umhüllen des Leitungssatzes einen der minutenintensivsten Produktionsschritte in der manuellen Fertigung darstellt. Somit kann kostengünstiger produziert werden. Die Verwendung von nachhaltigen Umreifungsmaterialien wie Biokunststoffen und der Verzicht auf Klebstoffe, welche die Umwelt belasten und das Recycling erschweren, erlauben zudem eine umweltfreundlichere Fertigung.

In einer Ausführungsform der Erfindung erfolgt das Zusammenführen des um den Leitungssatz herumgeführten Endes des Umreifungsmaterials mit dem nicht um den Leitungssatz herumgeführten Anteil des Umreifungsmaterials derart, dass ein vom Leitungssatz abstehender Überstand aus Umreifungsmaterial gebildet wird. Das Umreifungsmaterial wird vorzugsweise nicht möglichst bündig abgeschnitten, sondern es wird ein Überstand erzeugt. Durch den gezielten Überstand des Umreifungsmaterials entsteht ein Falz entlang des Leitungssatzes, ähnlich wie bei einer Paspel. Alternativ kann auch nur an bestimmten Stellen ein Stück des Umreifungsmaterials vom Leitungssatz abstehen. Dieser Falz oder die abstehenden Stücke des Umreifungsmaterials können dann vorteilhaft verwendet werden, um den Leitungssatz an einem Kunststoffteil des Fahrzeugs oder an einem entsprechenden Halteteil anzuschweißen, beispielsweise durch Ultraschall. Dieser Überstand kann entweder nur an bestimmten Stellen, welche für die Befestigung am Halteteil oder im Fahrzeug vorgesehen sind, oder auch über einen Großteil der Länge des Leitungssatzes vorhanden sein, ähnlich einer Paspel-Naht.

In einer Ausführungsform der Erfindung erfolgt das Verschweißen im Bereich des Überstandes aus Umreifungsmaterial. Dadurch steht ein planarer, flächiger Bereich zur Verfügung, in dem die beiden Lagen des Umreifungsmaterials einfach und haltbar miteinander verschweißt werden können. Weiterhin erlaubt das Verschweißen des Umreifungsmaterials im Bereich des Überstandes ein sicheres Befestigen des Umreifungsmaterials ohne die Gefahr, die Leitungen des Leitungssatzes zu beschädigen.

In einer Ausführungsform der Erfindung wird der Überstand aus Umreifungsmaterial mit dem Überstand eines auf dem Leitungssatz benachbarten Umreifungsabschnittes verschweißt.

Durch den Überstand des Umreifungsmaterials ergeben sich verschiedene weitere Vorteile. Es können zwei oder mehr benachbarte Umreifungsabschnitte am jeweiligen Überstand miteinander verschweißt werden. Dazu werden vorteilhafterweise benachbarte Umreifungsabschnitte so angebracht, dass eine Überlappung in Längsrichtung des Leitungssatzes auftritt. Durch Verschweißen der übereinanderliegenden Überstände zweier Umreifungsabschnitte entsteht ein durchgängiger, kontinuierlicher Schutzmantel aus Umreifungsmaterial, und die einzelnen Umreifungsabschnitte können nicht mehr auf dem Leitungssatz verrutschen. Das Umreifungsmaterial bündelt dabei nicht nur den Leitungssatz, sondern schützt ihn auch. Weiterhin kann das Umreifungsmaterial hierbei auch als Klapperschutz dienen, um unerwünschte Geräusche durch Bewegungen des Leitungssatzes im Fahrzeug zu minimieren.

In einer Ausführungsform der Erfindung ist der Überstand aus Umreifungsmaterial ausgeführt, mit einem Fahrzeug oder mit einem Halteteil verschweißt zu werden, wobei das Halteteil ausgeführt ist, in einem Fahrzeug befestigt zu werden, um den Leitungssatz in dem Fahrzeug zu befestigen. Der Überstand kann genutzt werden, um den Leitungssatz im Fahrzeug zu montieren. Dazu kann der Überstand des Leitungssatzes direkt mit einem Kunststoffteil des Fahrzeugs verschweißt werden. Der Leitungssatz kann damit fest am Kunststoffteil befestigt werden. Weitere Befestigungsmittel werden in dieser Ausführungsform nicht benötigt, was ein Einsparungspotential darstellt. Alternativ kann der Überstand des Umreifungsmaterials auch mit einem Halteteil verschweißt werden und somit zusammen mit dem Umreifungsband oder Vlies ein Halbteil bilden. Das Halteteil kann eine Tannenzapfen-artige Struktur aufweisen, welche bei der Montage in der Fahrzeug-Karosse in eine vorgesehene Öffnung zur Befestigung eingefügt wird. Gegenüber dem bisher praktizierten Anwickeln von Halteteilen an den Leitungssatz oder dem Einsatz von Kabelbindern zur Befestigung am Leitungsbündel ergeben sich somit Vorteile wie bessere Automatisierbarkeit, geringerer Platzbedarf, oder Kostenvorteile durch günstigeres Material und schnellere Fertigung. Auch die Verwendung von recyclingfähigen und umweltfreundlichen Materialien ist möglich.

In einer Ausführungsform der Erfindung erfolgt das Verschweißen durch Ultraschallschweißen. Die Anwendung der Ultraschalltechnologie zum Verschweißen von Kunststoffen ist nachhaltig. Sie benötigt weniger Energie als thermische Verfahren und keine Klebstoffe wie sie üblicherweise beim Umreifen mittels Wickelband verwendet werden.

In einer Ausführungsform der Erfindung wird das Umreifungsmaterial auf einer Rolle bereitgestellt, und das Verfahren weist weiterhin die Schritte des Abrollens des Umreifungsmaterials von der Rolle und des Abtrennens des nicht um den Leitungssatz herumgeführten Anteils des Umreifungsmaterials von der Rolle auf. Damit kann das Umreifungsmaterial flexibel an veränderliche Durchmesser des Leitungssatzes angepasst werden. Es wird nur so viel Umreifungsmaterial verwendet, wie zum Umfassen des Leitungssatzes und zum Vorsehen der Überstände benötigt wird. Nach dem Verschweißen, alternativ auch vor dem Verschweißen, kann das Umreifungsmaterial von der Rolle abgetrennt werden.

In einer Ausführungsform der Erfindung wird ein sich außerhalb eines Schweißbereiches befindender Teil des Überstandes abgetrennt. Damit kann ein überschüssiger, nicht benötigter Teil des Überstandes abgetrennt werden, so das Teile des Überstandes, welche sich außerhalb des verschweißten Bereiches befinden, entfernt werden. Beispielsweise kann der verschweißte Überstand in Bereichen, an denen der Leitungssatz nicht am Fahrzeug befestigt werden soll, stärker gekürzt werden, als in Bereichen, die zur Befestigung am oder im Fahrzeug vorgesehen sind. Vorzugsweise findet das Verschweißen und das Abtrennen des nicht benötigten Teils des Überstandes im selben Arbeitsschritt statt. Dies kann zu einer Zeitersparnis in der Fertigung führen.

In einer Ausführungsform der Erfindung werden die Schritte des Verfahrens automatisiert durchgeführt. Vorzugsweise werden alle Prozessschritte des Verfahrens automatisiert. Lediglich das Positionieren der Vorrichtung zum Umreifen am Leitungssatz und das Auslösen der Vorrichtung kann manuell erfolgen. In einer Ausführungsformen der Erfindung wird ein Handheld-Gerät durch einen Bediener am Leitungssatz positioniert und das Gerät ausgelöst, woraufhin die Schritte des erfindungsgemäßen Verfahrens automatisiert ausgeführt werden. In einer weiteren Ausführungsform wird ein Werkzeug für eine Maschine oder einen Roboter bereitgestellt, wobei der gesamte Prozess automatisiert durchgeführt wird.

Gemäß einem weiteren Aspekt der Erfindung wird eine Vorrichtung zum Bilden eines Umreifungsabschnittes eines Leitungssatzes vorgeschlagen. Die Vorrichtung weist einen Mechanismus zum Bereitstellen eines Umreifungsmaterials und eine Führungseinheit auf, wobei die Führungseinheit zum Herumführen eines Endes des Umreifungsmaterials um zumindest einen Teil des Leitungssatzes ausgeführt ist. Weiterhin weist die Vorrichtung eine Verbindungseinheit auf, die zum Zusammenführen des um den Leitungssatz herumgeführten Endes des Umreifungsmaterials mit einem nicht um den Leitungssatz herumgeführten Anteil des Umreifungsmaterials ausgeführt ist, wobei das Umreifungsmaterial eine Schlaufe bildet durch welche der Leitungssatz verläuft. Die Vorrichtung weist eine Spanneinheit auf, die zum Anpassen der Größe der Schlaufe an den Leitungssatz zum Bündeln des Leitungssatzes ausgeführt ist, und eine Schweißeinheit, ausgeführt zum Verschweißen des um den Leitungssatz herumgeführten Endes des Umreifungsmaterials mit dem nicht um den Leitungssatz herumgeführten Anteil des Umreifungsmaterials.

Eine mögliche Ausführungsform der erfindungsgemäßen Vorrichtung ist ein Handheld-Gerät, welches vom einem Bediener in der Hand gehalten werden kann, beispielsweise wie ein übliches Akku-Werkzeug. Der Bediener kann das Werkzeug dem Leitungssatz zuführen und es auslösen. Daraufhin umreift und bündelt das Werkzeug den Leitungsstrang automatisch. Das Gerät kann eine Rolle eines Umreifungsmediums, wie zum Beispiel einen Faden oder ein Band, aufnehmen und verarbeiten. Eine weitere mögliche Ausführungsform der erfindungsgemäßen Vorrichtung kann im Grunde ähnlich aufgebaut sein, jedoch mit dem Unterschied, dass die Vorrichtung nicht durch einen Bediener manuell geführt wird, sondern auf einem Roboter oder einer anderen Maschine montiert ist und von dieser bedient wird.

Die erfindungsgemäße Vorrichtung kann eine Art Bügel als Führungseinheit aufweisen, welcher um den Leitungssatz in Position gebracht wird. Der Bügel hat die Aufgabe, das Umreifungsmaterial um einen Kabelstrang des Leitungssatzes zu führen. Der Bügel kann aus einem oder mehreren Einzelteilen bestehen, welche im Ausgangszustand aufgeklappt sind, damit er leicht um den Leitungssatz geführt werden kann. Bei der Umreifung kann, je nach Ausführungsform, der Bügel bewegt, umgeklappt oder verschlossen werden, um das Umreifungsmaterial um den Leitungsstrang zu führen. Auch kann das Umreifungsmaterial durch den Bügel geschoben werden. Vorzugsweise ist der Bügel schlank und platzsparend geformt, so dass er auch bei beengten Platzverhältnissen um den Leitungssatz geführt werden kann. Die Vorrichtung weist des Weiteren eine Einrichtung zum Spannen des Umreifungsmaterials auf, so dass das Umreifungsmaterial eng am Leitungssatz anliegt und diesen bündelt. Durch eine Schweißeinheit der Vorrichtung wird das Umreifungsmaterial aneinander befestigt und somit verschlossen. Vorzugsweise trennt die Vorrichtung den verschweißten Umreifungsabschnitt von der Rolle und schneidet einen eventuellen nicht benötigten Überstand ab.

Somit gelten die Vorteile, die einer der oben genannten Aspekte bietet, gleichermaßen für alle anderen Aspekte und umgekehrt

Im Wesentlichen bezieht sich die Erfindung auf ein Verfahren zum Bilden eines Umreifungsabschnittes eines Leitungssatzes. Das Verfahren weist die Schritte des Bereitstellens eines Umreifungsmaterials und des Herumführens eines Endes des Umreifungsmaterials um zumindest einen Teil des Leitungssatzes auf. Weiterhin weist das Verfahren den Schritt des Zusammenführens des um den Leitungssatz herumgeführten Endes des Umreifungsmaterials mit einem nicht um den Leitungssatz herumgeführten Anteil des Umreifungsmaterials auf, wobei das Umreifungsmaterial eine Schlaufe bildet durch welche der Leitungssatz verläuft, sowie die Schritte des Anpassens der Größe der Schlaufe an den Leitungssatz zum Bündeln des Leitungssatzes, und des Verschweißens des um den Leitungssatz herumgeführten Endes des Umreifungsmaterials mit dem nicht um den Leitungssatz herumgeführten Anteil des Umreifungsmaterials.

Weitere Merkmale, Vorteile und Anwendungsmöglichkeiten der Erfindung ergeben sich aus der nachfolgenden Beschreibung von vorteilhaften Ausführungsformen und den begleitenden Figuren.

### Kurze Figurenbeschreibung

Nachfolgend wird ein vorteilhaftes Ausführungsbeispiel der Erfindung unter Bezugnahme auf die begleitenden Figuren erläutert.
Fig. 1 zeigt eine Schnittansicht von einem umreiften Leitungssatz gemäß einer Ausführungsform der Erfindung.
Fig. 2 zeigt eine Schnittansicht von einem an einem Fahrzeug angebrachten umreiften Leitungssatz gemäß einer Ausführungsform der Erfindung.
Fig. 3 zeigt in einer Draufsicht einen umreiften Leitungssatz gemäß einer Ausführungsform der Erfindung.
Fig. 4 zeigt in einer Draufsicht einen mit einer Vielzahl von Umreifungen umreiften Leitungssatz gemäß einer Ausführungsform der Erfindung.
Fig. 5A zeigt eine schematische Übersicht einer Vorrichtung zum Umreifen von Leitungssätzen im geöffneten Zustand gemäß einer Ausführungsform der Erfindung.
Fig. 5B zeigt eine schematische Übersicht einer Vorrichtung zum Umreifen von Leitungssätzen im geschlossenen Zustand gemäß einer Ausführungsform der Erfindung.
Fig. 6A zeigt eine schematische Übersicht einer Vorrichtung zum Umreifen von Leitungssätzen beim Schritt des Führens eines Umreifungsmaterials um einen Leitungssatz gemäß einer Ausführungsform der Erfindung.
Fig. 6B zeigt eine schematische Übersicht einer Vorrichtung zum Umreifen von Leitungssätzen beim Schritt des Spannens eines Umreifungsmaterials gemäß einer Ausführungsform der Erfindung.
Fig. 6C zeigt eine schematische Übersicht einer Vorrichtung zum Umreifen von Leitungssätzen beim Schritt des Verschweißens eines Umreifungsmaterials gemäß einer Ausführungsform der Erfindung.
Fig. 7A zeigt eine Schnittansicht von einem umreiften Leitungssatz mit einem auf den Überstand geschweißten Halteteil gemäß einer Ausführungsform der Erfindung.
Fig. 7B zeigt eine Schnittansicht von einem umreiften Leitungssatz mit einem auf den Umreifungsabschnitt geschweißten Halteteil gemäß einer Ausführungsform der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

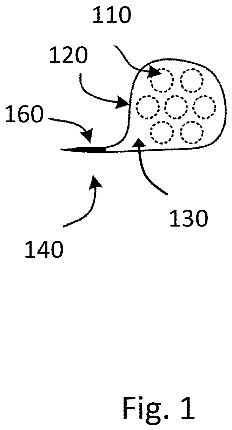

Fig. 1 zeigt eine Schnittansicht von einem umreiften Leitungssatz 110 gemäß einer Ausführungsform der Erfindung. Der einzelne Leitungen aufweisende Leitungssatz 110 ist von einer Umreifung aus Umreifungsmaterial 120 umgeben und gebündelt. Das Umreifungsmaterial 120 ist zu einer tropfenförmigen Schlaufe 130 geformt, durch welche der Leitungssatz 110 verläuft. Die beiden Enden des Umreifungsmaterials sind zusammengefügt und bilden einen Überstand 140. Auf diesem Überstand 140 befindet sich der Schweißbereich 160, mittels dem das Umreifungsmaterial 120 verbunden und verschlossen ist.

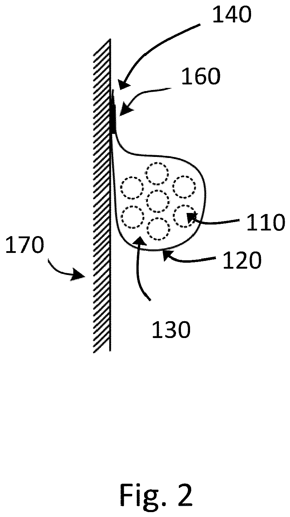

Fig. 2 zeigt eine Schnittansicht von einem an einem Fahrzeug 170 angebrachten umreiften Leitungssatz 110 gemäß einer Ausführungsform der Erfindung. Der Leitungssatz 110 ist von der Schlaufe 130 des Umreifungsmaterial 120 umgeben und gebündelt. Der Überstand 140 ist am Schweißbereich miteinander und mit einem Teil des Fahrzeugs 170 verschweißt, um den Leitungssatz 110 am Fahrzeug 170 zu befestigen und zu fixieren.

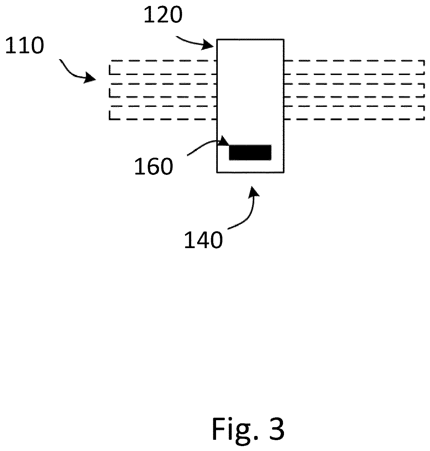

Fig. 3 zeigt in einer Draufsicht einen umreiften Leitungssatz 110 gemäß einer Ausführungsform der Erfindung. Das Umreifungsmaterial 120 hat in dieser Ausführungsform der Erfindung eine breite, bandartige Form. Der Schweißbereich 160 befindet sich mittig auf dem Überstand 140.

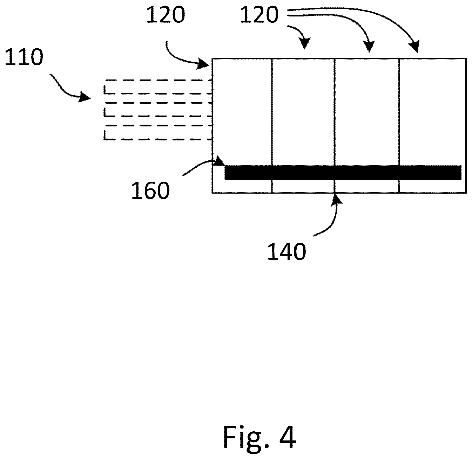

Fig. 4 zeigt in einer Draufsicht einen mit einer Vielzahl von Umreifungen umreiften Leitungssatz 110 gemäß einer Ausführungsform der Erfindung. Aus dem Umreifungsmaterial 120 sind eine Vielzahl von nebeneinanderliegenden Umreifungsabschnitten, im vorliegenden Beispiel vier, geformt, welche sich seitlich überlappen. Insbesondere liegen die Überstände 140 von zwei benachbarten Umreifungsabschnitten aufeinander, so dass durch eine Verschweißung im Schweißbereich 160 auf den Überständen 140 eine Verbindung benachbarter Umreifungsabschnitte gebildet wird. Dadurch ergibt sich vorteilhaft eine durchgängige Ummantelung des Leitungssatzes 110 mit Umreifungsmaterial 120.

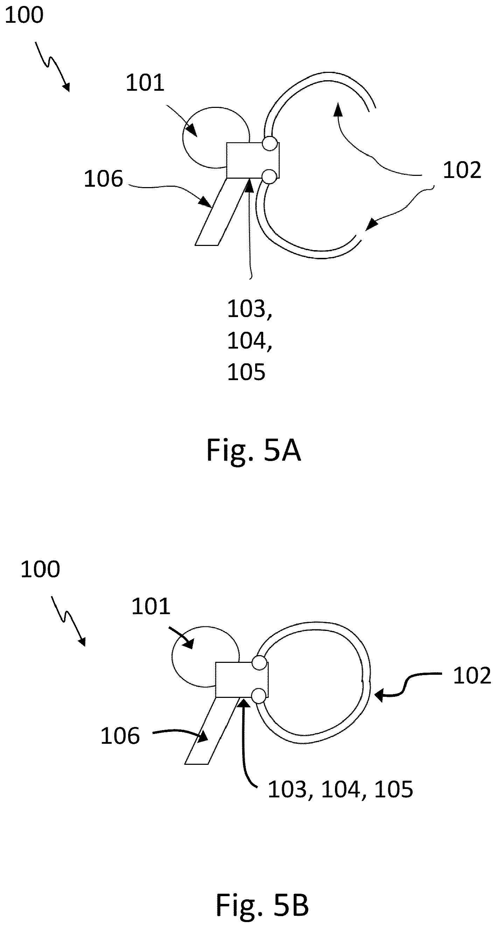

Fig. 5A zeigt eine schematische Übersicht einer Vorrichtung 100 zum Umreifen von Leitungssätzen 110 im geöffneten Zustand gemäß einer Ausführungsform der Erfindung. Die Vorrichtung 100 weist einen Mechanismus 101 zum Bereitstellen von Umreifungsmaterial 120 auf, wie beispielsweise eine Rolle oder einen Vorratsbehälter. Eine bügelförmige Führungseinheit 102, hier aus zwei Teilbügeln zusammengesetzt, dient zum Führen des Umreifungsmaterials 120 um einen Leitungssatz 110. Ferner weist die Vorrichtung 100 einen Handgriff 106 auf, mittels dem die Vorrichtung 110 von einem Bediener gehalten werden kann, oder auch an einem Roboter oder Automaten fixiert werden kann. Im zentralen Bereich der Vorrichtung 100, in dem das Umreifungsmaterial 120 gespannt, miteinander verbunden und verschweißt wird, befindet sich, hier nicht einzeln dargestellt, die Verbindungseinheit 103, die Spanneinheit 104 und die Schweißeinheit 105.

Fig. 5B zeigt eine schematische Übersicht einer Vorrichtung 100 zum Umreifen von Leitungssätzen 110 im geschlossenen Zustand gemäß einer Ausführungsform der Erfindung. Die zwei Teile des Bügels der Führungseinheit 102 sind hier im geschlossenen Zustand dargestellt, nachdem die Vorrichtung 100 an einem Leitungssatz positioniert ist. Die Bügel umgeben dabei den Leitungssatz 110.

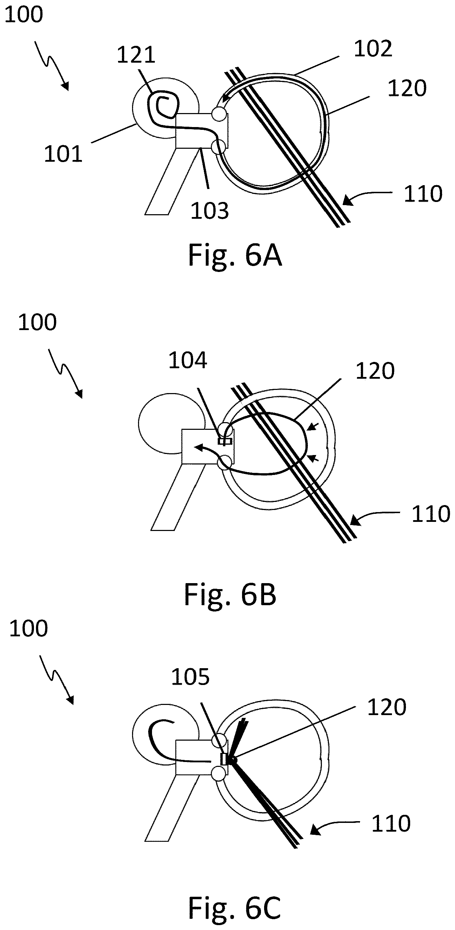

Fig. 6A zeigt eine schematische Übersicht einer Vorrichtung 100 zum Umreifen von Leitungssätzen 110 beim Schritt des Führens eines Umreifungsmaterials 120 um einen Leitungssatz 110 gemäß einer Ausführungsform der Erfindung. Das Umreifungsmaterial 120 wird dabei von der Rolle 121 aus dem Bereitstellungsmechanismus 101 abgerollt und durch die Führungseinheit 102 vorgeschoben, so dass das Umreifungsmaterial 120 den Leitungssatz 110 umgibt. In der Verbindungseinheit 103 wird das Ende des Umreifungsmaterials 120 mit einem Bereich des Umreifungsmaterials 120 in Kontakt gebracht, welcher nicht um den Leitungssatz 110 herumgeführt worden ist. Die Verbindungseinheit 103 verbindet die Enden des Umreifungsmaterials 120 und legt sie aufeinander, so dass eine Schlaufe 130 aus Umreifungsmaterial 120 gebildet wird.

Fig. 6B zeigt eine schematische Übersicht einer Vorrichtung 100 zum Umreifen von Leitungssätzen 110 beim Schritt des Spannens eines Umreifungsmaterials 120 gemäß einer Ausführungsform der Erfindung. Nach dem Führen des Umreifungsmaterials 120 um den Leitungssatz 110 wird das Umreifungsmaterial von einer Spanneinheit 104 gespannt und der Leitungssatz 110 damit gebündelt. Dabei kann sich das Umreifungsmaterial 120 im Richtung zum Leitungssatz 110 hin aus der Führungseinheit 102 lösen.

Fig. 6C zeigt eine schematische Übersicht einer Vorrichtung 100 zum Umreifen von Leitungssätzen 110 beim Schritt des Verschweißens eines Umreifungsmaterials 120 gemäß einer Ausführungsform der Erfindung. Nach dem Spannen des Umreifungsmaterials 120 liegt dieses eng am Leitungssatz 110 an. Durch eine Schweißeinheit 105 erfolgt ein Verschweißen des Umreifungsmaterials 120, vorzugsweise durch Ultraschallschweißen. Das Verschweißen findet dabei an einem Schweißbereich 160 statt, welcher sich auf einem Überstand 140 des Umreifungsmaterials 120 befindet.

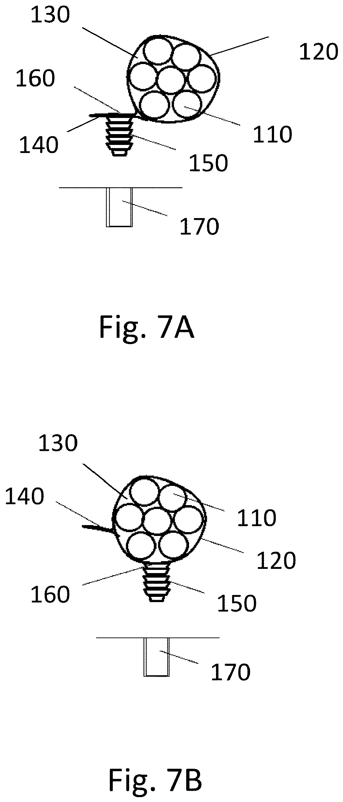

Fig. 7A zeigt eine Schnittansicht von einem umreiften Leitungssatz 110 mit einem auf den Überstand 140 geschweißten Halteteil 150 gemäß einer Ausführungsform der Erfindung. Der Leitungssatz 110 befindet sich in der Schlaufe 130 des Umreifungsmaterials 120 und wird von diesem umgeben. Auf den Überstand 140 des Umreifungsmaterials 120 ist ein Halteteil 150 geschweißt. Vorzugsweise passiert die Schweißung des Halteteils 150 an den Überstand 140 unter Benutzung desselben Schweißbereiches 160, mit dem das Umreifungsmaterial 120 am Überstand 140 verschweißt wird. Das Halteteil 150 kann eine tannenzapfenartige Struktur aufweisen, welche geeignet ist, bei Befestigung des Halteteils 150 in einer entsprechenden Öffnung eines Fahrzeugs 170 einen festen Sitz des Halteteils 150 im Fahrzeug 170 zu bewirken, so dass der Leitungssatz 110 im Fahrzeug 170 fixiert wird.

Fig. 7B zeigt eine Schnittansicht von einem umreiften Leitungssatz 110 mit einem auf den Umreifungsabschnitt geschweißten Halteteil 150 gemäß einer Ausführungsform der Erfindung. In dieser Ausführungsform ist das Halteteil 150 nicht am Überstand 140 angeschweißt, sondern befindet sich mit seinem Schweißbereich 160 direkt an dem den Leitungssatz 110 umhüllenden Umreifungsmaterial 120. Das Halteteil 150 kann so in einer Öffnung eines Fahrzeugs 170 befestigt werden, um den Leitungssatz 110 am Fahrzeug 170 zu befestigen.

Obwohl die Erfindung in den Zeichnungen und der vorstehenden Beschreibung illustriert und detailliert beschrieben wurde, sind diese Zeichnungen und Beschreibungen als illustrativ oder beispielhaft zu verstehen und nicht als einschränkend zu betrachten. Die Erfindung ist nicht auf die offenbarten Ausführungsformen beschränkt. Andere Variationen der offenbarten Ausführungsformen können von den Fachleuten, die die beanspruchte Erfindung ausführen, anhand der Zeichnungen, der Offenbarung und der abhängigen Ansprüche verstanden und ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Vorrichtung
- 101: Mechanismus zum Bereitstellen
- 102: Führungseinheit
- 103: Verbindungseinheit
- 104: Spanneinheit
- 105: Schweißeinheit
- 106: Handgriff
- 110: Leitungssatz
- 120: Umreifungsmaterial
- 121: Rolle
- 130: Schlaufe
- 140: Überstand
- 150: Halteteil
- 160: Schweißbereich
- 170: Fahrzeug

## Patentansprüche

1. Verfahren zum Bilden eines Umreifungsabschnittes eines Leitungssatzes (110), das Verfahren aufweisend die Schritte:
Bereitstellen eines Umreifungsmaterials (120);
Herumführen eines Endes des Umreifungsmaterials (120) um zumindest einen Teil des Leitungssatzes (110);
Zusammenführen des um den Leitungssatz (110) herumgeführten Endes des Umreifungsmaterials (120) mit einem nicht um den Leitungssatz (110) herumgeführten Anteil des Umreifungsmaterials (120), wobei das Umreifungsmaterial (120) eine Schlaufe (130) bildet durch welche der Leitungssatz (110) verläuft;
Anpassen der Größe der Schlaufe (130) an den Leitungssatz (110) zum Bündeln des Leitungssatzes (110), und
Verschweißen des um den Leitungssatz (110) herumgeführten Endes des Umreifungsmaterials (120) mit dem nicht um den Leitungssatz (110) herumgeführten Anteil des Umreifungsmaterials (120).

2. Verfahren nach Anspruch 1, wobei das Zusammenführen des um den Leitungssatz (110) herumgeführten Endes des Umreifungsmaterials (120) mit dem nicht um den Leitungssatz (110) herumgeführten Anteil des Umreifungsmaterials (120) derart erfolgt, dass ein vom Leitungssatz (110) abstehender Überstand (140) aus Umreifungsmaterial (120) gebildet wird.

3. Verfahren nach Anspruch 2, wobei das Verschweißen im Bereich des Überstandes (140) aus Umreifungsmaterial (120) erfolgt.

4. Verfahren nach Anspruch 3, wobei der Überstand (140) aus Umreifungsmaterial (120) mit dem Überstand (140) eines auf dem Leitungssatz (110) benachbarten Umreifungsabschnittes verschweißt wird.

5. Verfahren nach einem der Ansprüche 2 bis 4, wobei der Überstand (140) aus Umreifungsmaterial (120) ausgeführt ist, mit einem Fahrzeug (170) oder mit einem Halteteil (150) verschweißt zu werden, wobei das Halteteil (150) ausgeführt ist, in einem Fahrzeug (170) befestigt zu werden, um den Leitungssatz (110) in dem Fahrzeug zu befestigen.

6. Verfahren nach einem der vorhergehenden Ansprüche, wobei das Verschweißen durch Ultraschallschweißen erfolgt.

7. Verfahren nach einem der vorhergehenden Ansprüche, wobei das Umreifungsmaterial (120) auf einer Rolle (121) bereitgestellt wird, und wobei das Verfahren weiterhin die Schritte des
Abrollens des Umreifungsmaterials (120) von der Rolle (121) und des
Abtrennens des nicht um den Leitungssatz (110) herumgeführten Anteils des Umreifungsmaterials (120) von der Rolle (121) aufweist.

8. Verfahren nach einem der vorhergehenden Ansprüche, wobei ein außerhalb eines Schweißbereiches (160) befindlicher Teil des Überstandes (140) abgetrennt wird.

9. Verfahren nach einem der vorhergehenden Ansprüche, wobei die Schritte des Verfahrens automatisiert durchgeführt werden.

10. Vorrichtung (100) zum Bilden eines Umreifungsabschnittes eines Leitungssatzes (110), aufweisend:
einen Mechanismus (101) zum Bereitstellen eines Umreifungsmaterials (120);
eine Führungseinheit (102), ausgeführt zum Herumführen eines Endes des Umreifungsmaterials (120) um zumindest einen Teil des Leitungssatzes (110);
eine Verbindungseinheit (103), ausgeführt zum Zusammenführen des um den Leitungssatz (110) herumgeführten Endes des Umreifungsmaterials (120) mit einem nicht um den Leitungssatz (110) herumgeführten Anteil des Umreifungsmaterials (120), wobei das Umreifungsmaterial (120) eine Schlaufe (130) bildet durch welche der Leitungssatz (110) verläuft;
eine Spanneinheit (104), ausgeführt zum Anpassen der Größe der Schlaufe (130) an den Leitungssatz (110) zum Bündeln des Leitungssatzes (110), und
eine Schweißeinheit (105), ausgeführt zum Verschweißen des um den Leitungssatz (110) herumgeführten Endes des Umreifungsmaterials (120) mit dem nicht um den Leitungssatz herumgeführten Anteil des Umreifungsmaterials (110).
